# DEMANDE DE BREVET EUROPEEN

(11) **EP 1 348 876 A1**
(43) Date de publication de la demande: **01.10.2003**
(21) Numéro de dépôt: 03290290.0
(22) Date de dépôt: 05.02.2003
(51) Int. Cl.: F16B 21/07, F16B 5/06, F16F 1/373

(54) **Dispositif de fixation et de découplage vibratoire bimatière**

(30) Priorité: 27.02.2002 FR 0202485
(71) Demandeur: Centre d'Etude et de Recherche pour l'Automobile ( CERA), 51100 Reims (FR)
(72) Inventeur: Lanfranchini, Jean-Luc, 51100 Reims (FR); Pothier, Marc, 51100 Reims (FR); Vitrant, Olivier, 51100 Reims (FR)
(74) Mandataire: Geismar, Thierry

(57) **Abrégé**

L'invention a pour objet un dispositif (2) de fixation et de découplage vibratoire d'un premier élément (1) à un deuxième élément, ledit deuxième élément étant solidaire d'une tige de montage (3), ledit dispositif (2) comprenant une pièce en matériau souple (4) pourvue de moyens d'association (5) dudit dispositif (2) sur ledit premier élément (1), caractérisé en ce qu'une pièce en matériau rigide (6) est associée sur une partie de la pièce en matériau souple (4), ladite pièce en matériau rigide (6) comprenant un logement (7) agencé pour recevoir et associer de façon réversible la tige de montage (3).

## Description

L'invention concerne un dispositif de fixation et de découplage vibratoire d'un premier élément à un deuxième élément, un ensemble comprenant le premier élément et un tel dispositif, ainsi qu'un système comprenant le deuxième élément et un tel ensemble.

L'invention s'applique typiquement à la fixation d'un écran, notamment acoustique sur un moteur, notamment de véhicule automobile.

Les écrans acoustiques sont fixés sur la partie supérieure du moteur de sorte à éviter la propagation du bruit vers le haut. Or ces écrans sont soumis, du fait de leur fixation sur le moteur, aux vibrations de ce dernier. Il est donc essentiel que les moyens de fixation de l'écran au moteur permettent d'amortir les vibrations de telle sorte que l'écran ne soit pas lui-même source de bruit.

On connaît déjà, notamment du document FR-2 796 998, un dispositif de fixation et de découplage vibratoire d'un premier élément à un deuxième élément, ledit deuxième élément étant solidaire d'une tige de montage, ledit dispositif comprenant une pièce en matériau souple pourvue de moyens d'association dudit dispositif sur ledit premier élément.

Ce type de dispositif, s'il permet un bon découplage vibratoire en ce que la pièce en matériau souple amortit une partie des vibrations, présente une tenue mécanique qui peut être insuffisante dans le cadre de son application.

Pour pallier cet inconvénient, il est nécessaire de réaliser des pièces de géométrie relativement complexe, ce qui augmente d'autant la taille de celles-ci ainsi que leur difficulté de réalisation.

L'invention concerne un perfectionnement d'un tel dispositif, dans lequel une pièce en matériau rigide est associée à la pièce en matériau souple, la tige étant associée à ladite pièce en matériau rigide de sorte à fiabiliser de façon optimale la fixation de ladite tige, et ce sans complexifier la géométrie de la pièce en matériau souple.

Ainsi, l'invention permet de combiner la capacité d'amortissement des vibrations de la pièce en matériau souple avec la tenue mécanique de la pièce rigide, et ce en pouvant moduler de façon simple la géométrie d'un tel dispositif.

A cet effet, et selon un premier aspect, l'invention propose un dispositif de fixation et de découplage vibratoire d'un premier élément à un deuxième élément, ledit deuxième élément étant solidaire d'une tige de montage, ledit dispositif comprenant une pièce en matériau souple pourvue de moyens d'association dudit dispositif sur ledit premier élément, une pièce en matériau rigide étant associée sur une partie de la pièce en matériau souple, ladite pièce en matériau rigide comprenant un logement agencé pour recevoir et associer de façon réversible la tige de montage.

Selon un deuxième aspect, l'invention concerne un ensemble comprenant le premier élément et au moins un tel dispositif.

Selon un troisième aspect, l'invention concerne un système comprenant le deuxième élément et un tel ensemble.

D'autres objets et avantages de l'invention apparaîtront au cours de la description qui suit, faite en référence aux dessins annexés dans lesquels :
- La figure 1 est une vue en coupe axiale d'un ensemble montrant partiellement un premier élément, sur lequel est associé un dispositif de fixation et de découplage vibratoire dudit premier élément sur un deuxième élément, la figure montrant en outre une tige de montage solidaire dudit deuxième élément qui est insérée dans le dispositif de fixation ;
- La figure 2 est une vue éclatée et en perspective du dispositif de fixation et de découplage vibratoire de la figure 1, dans lequel est insérée la tige de montage ;
- La figure 3 est une vue en perspective d'une cage du premier élément de la figure 1 ;
- La figure 4 est une vue en perspective du cadre rigide qui, sur la figure 1, est disposé dans un logement de la cage de la figure 3 ; et
- La figure 5 est une vue en perspective de la tige de montage des figures 1 et 2.

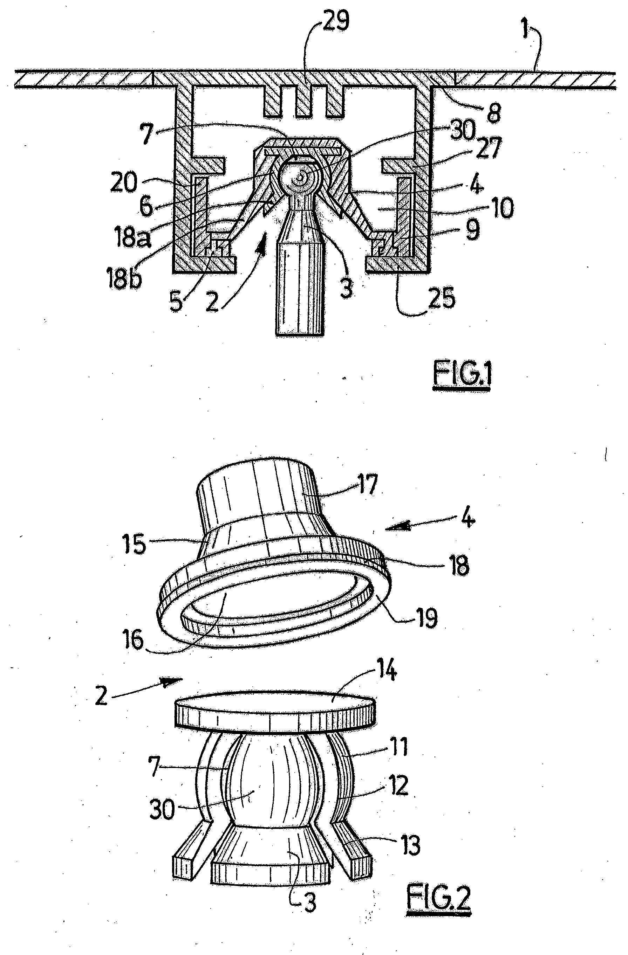

On décrit, en relation avec la figure 1, un ensemble comprenant un premier élément 1 et un dispositif de fixation et de découplage vibratoire 2 du premier élément 1 à un deuxième élément, ledit dispositif étant associé au premier élément. Ce dispositif est destiné à recevoir une tige de montage 3 solidaire du deuxième élément (non représenté).

Ce dispositif 2 est notamment destiné à être placé entre un premier élément 1 tel qu'un écran acoustique, et un moteur de véhicule automobile formant ou auquel est associé le deuxième élément.

Dans cette application, une pluralité de dispositifs de fixation et de découplage vibratoire 2 est associée à la surface inférieure de l'écran. Le deuxième élément est situé sous l'écran, et sensiblement parallèlement à celui-ci. Une pluralité de tiges de montage 3 est associée audit deuxième élément, de sorte à coopérer chacune avec un dispositif 2.

Le dispositif 2 comprend une pièce en matériau souple 4 pourvue de moyens d'association 5 du dispositif 2 sur le premier élément 1, et une pièce en matériau rigide 6 associée sur une partie de la pièce en matériau souple 4, ladite pièce en matériau rigide 6 comprenant un logement 7 agencé pour recevoir et associer de façon réversible la tige de montage 3.

Selon un mode de réalisation, la pièce en matériau souple 4 est surmoulée sur la pièce en matériau rigide 6.

Le premier élément 1 comprend, selon le mode de réalisation représenté, une cage 8 agencée pour loger le dispositif 2. En outre, un cadre rigide 9 disposé dans un logement 10 de la cage 8 est fixé aux moyens d'association 5 de la pièce en matériau souple 4. Ce cadre rigide 9 est destiné à permettre la fixation et le maintien du dispositif 2 dans la cage 8.

On décrit à présent, en relation avec les figures 2 à 5, chacun des éléments qui sont représentés montés sur la figure 1.

Dans la description qui suit, on entend respectivement par supérieures et inférieures les zones proches du premier élément et les zones proches du deuxième élément, et par verticales et horizontales les zones sensiblement perpendiculaires et les zones sensiblement parallèles au premier élément.

Le dispositif 2 représenté sur la figure 2 comprend une pièce en matériau rigide 6 formée d'une paroi 11 délimitant un logement 7. Ce logement 7 comprend une partie supérieure sensiblement cylindrique 12 et une partie inférieure tronconique 13. La partie supérieure 12 de ladite pièce 6 est formée d'une paroi 14 s'étendant radialement de part et d'autre de la partie cylindrique 12, de sorte à assurer le maintien de la pièce en matériau rigide 6 dans la pièce 4 en matériau souple, lorsque ces deux pièces 4 et 6 sont assemblées.

La pièce en matériau souple 4 est formée d'une paroi 15 délimitant un logement 16 dont la partie supérieure 17 est sensiblement cylindrique, et dont la partie inférieure 18 est de forme tronconique. La partie supérieure 17 de ce logement 16 est agencée pour pouvoir loger la partie supérieure 12 de la pièce en matériau rigide 6, ainsi que la paroi radiale 14.

La partie inférieure 18 de la pièce en matériau souple 4 est agencée pour loger, sur une partie 18a de sa surface, la partie tronconique 13 de la pièce en matériau rigide 6. Ainsi, la pièce en matériau souple 4 peut assurer une fonction d'amortissement des vibrations, car elle s'étend au-delà de la pièce en matériau rigide 6.

La partie inférieure 18b de la pièce en matériau souple 4 sur laquelle la pièce en matériau rigide 6 ne vient pas en contact comprend en outre les moyens d'association 5 du dispositif 2 sur le premier élément 1. Ces moyens 5 comprennent une saillie circulaire 19 s'étendant vers l'extérieur, destinée à permettre la fixation de ladite pièce 4 sur le cadre 9 (figure 4).

Le cadre 9 comprend une paroi verticale 20 délimitant un orifice 21 agencé pour recevoir la partie tronconique 18 de la pièce en matériau souple 4. Il comprend également, en partie inférieure, une zone circulaire 22 destinée à recevoir la saillie 19 de la pièce 4, de sorte à permettre le maintien de celle-ci.

Selon une réalisation, l'association de la pièce en matériau souple 4 sur le cadre 9 est réalisée par surmoulage de ladite pièce 4 sur ledit cadre 9. A cet effet, des orifices sont prévus sur la zone circulaire 22 du cadre 9, de sorte à permettre l'accrochage et le maintien de la pièce 4 sur le cadre 9 lors du moulage.

Selon une réalisation, le cadre 9 est réalisé en matériau rigide de type polyamide.

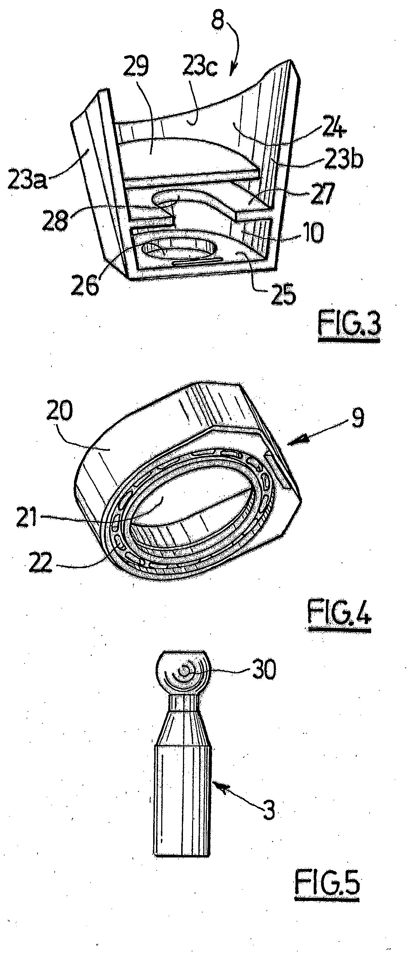

L'ensemble constitué par le dispositif 2 et le cadre 9 est destiné à être logé dans la cage 8 (figure 3), qui est formée par exemple de façon monobloc sur la face inférieure du premier élément 1.

La cage 8 est formée de trois parois verticales 23a, 23b et 23c délimitant un logement 24, et d'une paroi horizontale 25 formant la surface inférieure de la cage 8. Cette paroi horizontale 25 est percée d'un orifice 26 agencé pour recevoir la tige de montage 3.

Une deuxième paroi horizontale 27 est située sensiblement au centre de la cage 8. Elle est munie d'un évidement 28 agencé pour permettre l'insertion du dispositif de fixation 2, lorsque les deux pièces 4 et 6 ont été assemblées.

L'espace intérieur délimité par les parois horizontales 25, 27, et les parois verticales 23a, 23b et 23c forme un logement 10 pour le cadre rigide 9, dont la forme est prévue pour être sensiblement complémentaire à celle dudit logement 10.

Ainsi, le cadre 9 peut être logé entre les deux parois horizontales 25 et 27 de la cage 8, la hauteur de la paroi verticale 20 étant légèrement inférieure à la distance entre ces deux parois 25 et 27.

La cage 8 comprend en outre, sur sa partie supérieure, une butée 29 permettant de limiter le déplacement du dispositif 2 lors de l'insertion de la tige 3.

La tige de montage 3 (figure 5) comporte à son extrémité supérieure une tête 30 de diamètre supérieur à celui de la tige 3, agencée pour pouvoir s'engager dans la partie sensiblement cylindrique 12 du logement 7 de la pièce en matériau rigide 6.

Lors du montage d'un écran acoustique sur un moteur, l'écran muni d'une pluralité de cages 8, dans chacune desquelles est disposé un dispositif 2 associé à un cadre rigide 9, est présenté au-dessus du moteur sur lequel sont montées des tiges 3 destinées chacune à être introduites dans un dispositif 2.

L'écran est ensuite abaissé de manière à insérer en force les têtes 30 des tiges 3 dans les logements 7 des pièces en matériau rigide 6.

En variante, non représentée, les cages 8 comprenant chacune un dispositif 2 associé à un cadre rigide 9 peuvent être installées au-dessus du moteur, les tiges de montage 3 étant dans ce cas montées solidaires de la surface inférieure de l'écran.

Selon un mode de réalisation, la pièce en matériau rigide 6 est réalisée en matière plastique de type polyamide, et la pièce en matériau souple 4 est réalisée en polyuréthanne.

Le choix d'un matériau rigide pour la réalisation de la pièce 6 permet de conférer au dispositif une bonne tenue mécanique, et d'assurer ainsi un accrochage sûr de la tige de montage 3, dans toutes les positions et orientations de ladite tige 3.

Et le choix d'un matériau souple, notamment élastique, pour la réalisation de la pièce 4 permet d'assurer la fonction de découplage du moteur et de l'écran acoustique.

## Revendications

1. Dispositif (2) de fixation et de découplage vibratoire d'un premier élément (1) à un deuxième élément, ledit deuxième élément étant solidaire d'une tige de montage (3), ledit dispositif (2) comprenant une pièce en matériau souple (4) pourvue de moyens d'association (5) dudit dispositif (2) sur ledit premier élément (1), **caractérisé en ce qu'**une pièce en matériau rigide (6) est associée sur une partie de la pièce en matériau souple (4), ladite pièce en matériau rigide (6) comprenant un logement (7) agencé pour recevoir et associer de façon réversible la tige de montage (3).

2. Dispositif selon la revendication 1, **caractérisé en ce que** la pièce en matériau souple (4) comprend une partie supérieure cylindrique (17) dans laquelle la pièce en matériau rigide (6) est disposée, et une partie inférieure (18) sur laquelle les moyens d'association sont prévus.

3. Dispositif selon la revendication 1 ou 2, **caractérisé en ce que** la pièce en matériau souple (4) est surmoulée sur la pièce en matériau rigide (6).

4. Ensemble comprenant au moins un dispositif (2) selon l'une quelconque des revendications 1 à 3, et un premier élément (1).

5. Ensemble selon la revendication 4, **caractérisé en ce que** le premier élément (1) comprend une cage (8) dans lequel le dispositif (2) est disposé.

6. Ensemble selon la revendication 5, **caractérisé en ce qu'**il comprend en outre un cadre (9) de forme sensiblement complémentaire à un logement (10) prévu dans la cage (8), ledit cadre (9) étant fixé aux moyens d'association (5) de la pièce en matériau souple (4).

7. Ensemble selon la revendication 5 ou 6, **caractérisé en ce que** la cage (8) comprend une butée (29) agencée pour limiter le déplacement du dispositif (2) lors de l'insertion de la tige de montage (3).

8. Système comprenant un ensemble selon l'une quelconque des revendications 4 à 7 et le deuxième élément sur lequel sont montées des tiges (3) de sorte à coopérer chacune avec un dispositif (2) de l'ensemble.

9. Système selon la revendication 8, **caractérisé en ce que** la tige de montage (3) comprend une tête (30) destinée à être insérée en force dans le logement (7) de la pièce en matériau rigide (6).

10. Système selon la revendication 8 ou 9, **caractérisé en ce que** le premier élément (1) est un écran acoustique destiné à être disposé sur un moteur, notamment de véhicule automobile, auquel le deuxième élément est associé.
